# EUROPEAN PATENT SPECIFICATION

(11) **EP 0 307 955 B1**
(45) Date of publication and mention of the grant of the patent: **17.03.1993**
(21) Application number: 88115303.5
(22) Date of filing: 19.09.1988
(51) Int. Cl.: A47J 31/56

(54) **Coffee-making machine with a water heater device**
Kaffeemaschine mit einer Wasserheizungsvorrichtung
Machine à café avec chaudière à eau

(30) Priority: 21.09.1987 IT 1253987
(43) Date of publication of application: 22.03.1989
(73) Proprietor: Rolla, Alberto, I-16145 Genova (IT)
(72) Inventor: Rolla, Alberto, I-16145 Genova (IT)
(74) Representative: Porsia, Bruno

(56) References cited:
- EP-A- 0 001 453
- EP-A- 0 041 485
- EP-A- 0 236 549
- DE-A- 2 434 336
- DE-C- 625 857
- FR-A- 379 362
- GB-A- 867 670
- GB-A- 1 512 964
- GB-A- 2 079 908
- US-A- 3 634 107
- US-A- 4 000 396

## Description

The invention refers to coffee-making machines provided with a water heater device according to the precharacterizing part of claim 1.

A water heater device of this kind is known from the document GB-A-2 079 908. In this water heater device the dispensing spout has its upper part connected to the boiler upper part which is only full of steam, and the hot water-supplying duct is connected, separately from the dispensing spout, to the boiler lower part which is full of hot water. Thus, only steam, and not hot water, can be dispensed through the dispensing spout.

The object of the invention is to make the water heater device of the coffee-making machine in such a manner that either steam or hot water can be alternatively dispensed as desired through the steam dispensing spout.

This problem is solved by the invention with the combination of features as stated in the characterizing part of claim 1.

In the machine according to the invention, the water in the boiler is heated and is maintained with the aid of only one thermostat at the steam-producing temperature, i.e., at the higher one of the two coffee machine-operating temperatures, while the lower temperature water, i.e., the water used for making coffee, or the hot water dispensed from the dispensing spout, are obtained by admixing cold water to the boiler water, so that the lower temperature water is at once available with no wait time, and the coffee machine is always immediately ready for any condition of use.

Through the steam-dispensing spout hot water is normally dispensed, in that similarly to the hot water-supplying duct connected to the coffee-making unit, the said dispensing spout is branched from the same single delivery line connected to the cold water/boiler water admixing point. A higher than atmospheric pressure is normally maintained in the boiler, and in order to have steam delivered through the dispensing spout, the said overpressure is at least slightly lowered, for example, by interrupting the pump-feeding of cold water to the boiler, and by opening the steam delivery valve.

Further advantageous improvements of the invention are characterized in the dependent claims.

Some embodiments of the invention are shown in the accompanying drawing, and are described more in detail in the following specification.

In the drawing:
Figure 1 shows the structural arrangement of a coffee machine according to the invention.
Figure 2 is a sectional partial view showing a modified embodiment of the coffee machine according to Figure 1.
Figure 3 is a sectional view showing a type of valve which is applicable to the embodiment according to Figure 1, in lieu of one of the throttled portions provided in the said Figure 1.

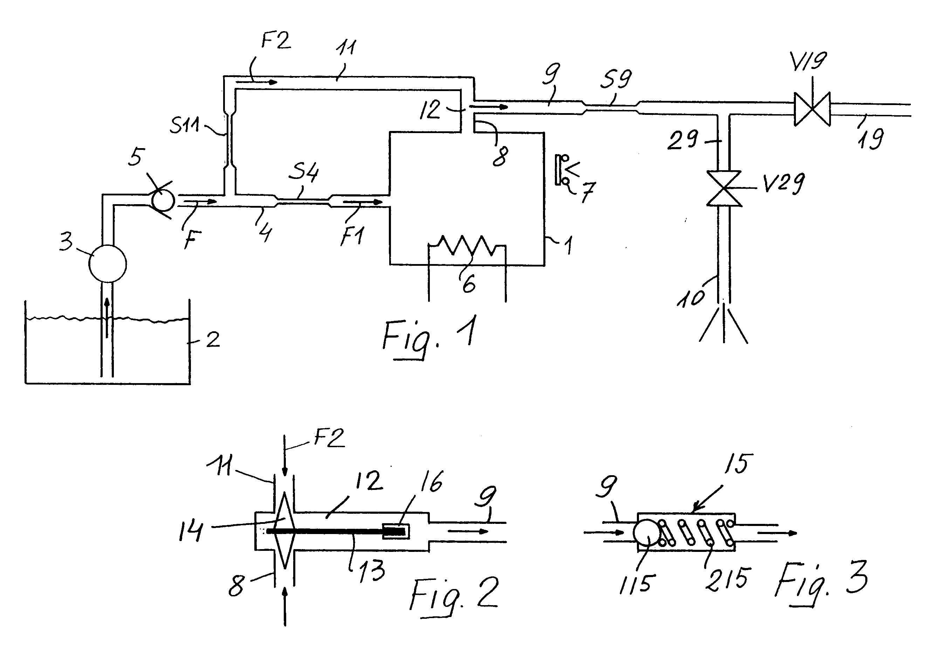

In Figure 1, by numeral 1 there is designated the boiler of a coffee machine. The boiler 1 is supplied with cold water from a reservoir 2 by a pump 3 and through a feeding line 4. In the cold water feeding line 4 there is provided downstream of pump 3, a nonreturn valve 5 (which is normally integrated in the pump 3) and downstream of this valve, at a distance therefrom, there is provided a calibrated throttled portion S4.

The water in boiler 1 is heated by the resistance 6 and with the aid of a thermostat 7. The duct 8 for the outflow of hot water from the boiler 1 is connected through a delivery line 9 to two branches 19 and 29 provided each with an on-off valve V19 and V29, or with a cock, or the like. The valves V19, V29 may be hand-operated or they may consist of solenoid valves, or the like. The branch 19 is connected to at least one coffee-making unit (not shown), while the branch 29 is connected to at least one hot water or steam dispensing spout 10. In the hot water delivery line 9 a calibrated throttled portion S9 is provided upstream of the bifurcation of the two branches 19 and 29.

From a point on the cold water feeding line 4, between the nonreturn valve 5 and the throttled portion S4, an offtake duct 11 provided with a calibrated throttled portion S11, is branched off and opens at an admixing point 12 into the line 9 for the delivery of hot water from the boiler 1, upstream of the respective calibrated throttled portion S9.

The operation of the above disclosed device will become apparent from the following illustrative embodiment.

Let us assume that the cold water sucked by the pump 3 from the reservoir 2 and delivered into the feeding line 4 be at about 20°C, and that it is desired to obtain outflowing hot water at about 90°C (through the branch 19 provided with the valve V19, for making coffee, or through the branch 20 provided with the valve V29, for the dispensing spout 10). By the resistance 6 and the thermostat 7 the water in boiler 1 is then heated and kept at about 120°C. The two calibrated throttled portions S4 and S11 are so sized that the cold water flow F getting into the feeding line 4 is divided into a partial flow F1 that corresponds to about 70% of the incoming flow F and that flows into the boiler 1 through the throttled portion S4, and into a partial flow F2 that corresponds to about 30% of the incoming flow F and that flows through the throttled portion S11 into the offtake duct 11. Through the outlet of boiler 1 there flows out a flow which is equal to the flow F1 that penetrates into said boiler 1, but that is at a temperature of 120°C. Consequently, the water downstream of the admixing point 12 is formed for the 30% by the water flow F2 at 20°C and for the 70% by the water flow at 120°C flowing out of the boiler 1, so that this water is at a temperature of about 90°C.

The throttled portion S9 in the delivery line 9, downstream of the admixing point 12, is so sized that the delivery of hot water through the line 9 is limited to such a quantity that the pump S is allowed to maintain the pressure in boiler 1 at a higher value than the boiling pressure of water at the foreseen temperature. If the water temperature in the boiler is at 120°C, the said overpressure in boiler 1 must be by at least 1 Kg/sq.cm higher than the external atmospheric pressure. Without the said overpressure, steam bubbles may be formed, which would alter the predetermined admixing ratio, and then also the final temperature of the delivered hot water. It is apparent that in the considered embodiment, a variation of ± 10°C in the temperature of the inflowing water will determine an error of only ± 3°C in the temperature of the ouflowing water.

In order to obtain the production and the delivery of steam, the pump 3 is stopped by opening the valve V29 and by closing the valve V19, while the heating resistance 6 may be left connected. The water contained in boiler 1 starts boiling immediately owing to the pressure being lowered due to the opening of valve V29, so that steam is supplied to the dispensing spout 10. The throttled portion S9 in the delivery line 9 however so limits the outflow of steam that a higher than atmospheric pressure will be maintained in boiler 1. As a consequence, the water in boiler 1 boils at a temperature that is higher than 100°C, preferably at a temperature as near as possible to 120°C, so that superheated, and then quite dry, steam will be delivered. The nonreturn valve 5 prevents hot water from flowing back to the reservoir 2 when the pump 3 is at a standstill.

In a modified embodiment of the above disclosed coffee machine, according to the invention, the two throttled portions S4 and S11 in the feeding line 4 and in the offtake duct 11 are eliminated and replaced with adjustable throttling valves controlled by a thermostat which is responsive to the water temperature at the admixing point 12 or downstream thereof. An example of this modified embodiment is illustrated in Figure 2, which shows the admixing point and connection point between the duct 8 for the outflow of water from the boiler 1 and the duct 11 for the offtake of cold water from the feeding line 4, as well as the line 9 for the delivery of hot water to the coffee-making unit (branch 19) and/or to the dispensing spout 10 (branch 29). In this instance, the said admixing and connection point is made in form of a chamber 12 into which the two ducts 8 and 11 open at facing co-axial positions. In chamber 12 there is housed a bimetallic blade 13 which by one of its ends is secured, for example, to a crosspiece 16, while at its opposite end it carries a double valve plug 14 which is associated with the facing inlets of the two ducts 8 and 11. The whole arrangement is such that the bimetallic blade 13 bends and deflects in the one or the other direction, depending on the temperature of the admixed hot water flowing through the delivery line 9 out of chamber 12, into which the said bimetallic blade is immersed, so that the valve plug 14 is drawn nearer to the inlet of one of the ducts 8, 11 and it is simultaneously drawn by a same degree away from the inlet of the other duct, the cross-section of the opening of one of the inlets being thus increased, and the cross-section of the opening of the other inlet being then reduced, whereby the predetermined temperature value for the admixed water flowing out of chamber 12 through the delivery line 9, will be automatically maintained. In order to permit the delivery of steam, the elasticity of the bimetallic blade 13 must be such that this blade will bend and allow the passage of the steam flowing out from duct 8. Additionally, when the thermostat with the bimetallic blade 13 according to Figure 2, is used, a nonreturn valve must be provided in the cold water feeding line 4, at its inlet into the boiler 1.

The thermostat with the bimetallic blade 13 which is immersed into the water to be kept at the required temperature, has a higher precision and a faster action than the thermostats that have been up to now used for controlling the water temperature in coffee machines. In fact, the known thermostats are not set in contact with the water, but they are usually applied on the external surface of the boiler or of the line. Hence, they act with a certain delay. Furthermore, owing to their construction, they present a considerable differential, that is to say, a considerable temperature difference between connection and disconnection. It is obvious that these inconveniences are eliminated by the embodiment according to Figure 2.

In a further modified embodiment of the coffee machine according to Figure 1, the calibrated throttled portion S9 in the hot water delivery line 9 is replaced with a nonreturn pressure relief valve 15 made, for example, as a ball valve 115 which is kept closed by a gauged pressure spring 215, as shown in Figure 3. In this case, the pressure in boiler 1 is determined by the bias of spring 215, which the hot water or the steam must overcome to flow out of boiler 1.

The coffee machines, for example automatic coffee machines, in which the coffee-making unit or units are not made of metal and are not set in contact with the boiler, so that these units are not kept at a certain temperature by the boiler itself, have the inconvenience that the coffee-making unit and also the powdered coffee contained therewithin are initially cold, and so they absorb a certain quantity of heat that appreciably lowers the temperature of the coffee infusion fraction being first delivered. Therefore, the temperature of these coffees, particularly the strong coffees, is a disagreably low temperature.

According to another modified embodiment of the invention, in order to eliminate the said inconvenience at least a certain section, preferably an end section of the offtake duct 11 conducting cold water to the admixing point 12, is set in contact with the boiler or forms part of the boiler itself. Thus, during an inoperative time of the coffee machine, the water contained in the said section of the offtake duct 11 will be heated up to a certain degree. Therefore, the hot water being initially supplied to the coffee-making unit is at a higher temperature than the normal water which will be supplied in the successive step, since the normal water results from the admixing of the water from the boiler 1 with water which is warmer than the cold water fed from the reservoir 2 to the feeding line 4 and the offtake duct 11 by the pump 3. It is thus compensated for the loss of that heat which is needed for initially heating the coffee-making unit.

By making the whole assembly in such a manner that the heating of the water in the offtake duct 11 by means of a transfer of heat from the boiler, will occur at a rate which is substantially equal to the successive cooling rate of the coffee-making unit, a constant temperature of the delivered coffee is obtained, irrespective of the delivered quantity and the inoperative time interval between two subsequent preparations of coffee. In fact, when this interval is short, whereby the coffee-making unit cools only partially, there is also a lesser heating of the water which is contained in the offtake duct 11 section into contact with the boiler 1, and which first reaches the admixing point 12.

For the same purpose as disclosed above, that is, when desiring to keep the coffee-making unit or units at a predetermined operative temperature, in the coffee-making units there may be formed one or more ducts and/or hollow spaces into which the steam taken from the boiler top will be fed. The said steam which condenses owing to a temperature difference (the coffee-making unit is certainly kept at a lower temperature than the boiler's), transfers the required quantity of heat. The condensation water which is collected in the bottom of the said hollow space, can spontaneously flow through a return pipe into the boiler simply by gravity, when the boiler is located at a lower position than the coffee-making unit. This arrangement for keeping warm the coffee-making units is self-adjusting, since once the internal surface of the hollow space has been sized (the larger the surface, the greater is the quantity of condensed steam, and the higher is the temperature, and vice-versa), any temperature drop in the coffee-making unit causes the condensation of a greater quantity of steam which gives rise to an increased heating, and vice-versa. A small thermostat may be used, which at the required temperature limits or stops the inflow of steam.

According to another embodiment of the invention, both the offtake duct 11 with its respective calibrated throttled portion S11, and the calibrated throttled portion S4 are eliminated, and the cold water feeding line 4 is caused to open into the boiler 1 in proximity of the outflow duct 8, at such a distance from the outlet thereof and with such an arrangement that the cold water introduced through the feeding line 4 into the boiler 1, is immediately admixed with the hot water which is about to flow out of boiler 1, or the hot water flow flowing out of boiler 1 through the duct 8, immediately drives along a certain quantity of inflowing cold water. Consequently, the hot water which through the delivery line 9 is supplied to the coffee-making unit or to the dispensing spout 10, is still obtained by admixing cold water and water being heated in the boiler 1. Differently from the shown embodiment, such an admixing does not occur outside of the boiler 1, but it occurs at the interior thereof, in proximity of the outlet 8.

The invention changed and modified, the more so in construction. Thus, for example, two dispensing spouts may be provided for separately dispensing hot water and steam. In this instance, the boiler which may be not entirely filled, may have two separate outlets, a steam upper outlet, and a hot water lower outlet. With each one of these outlets there may be associated a respective, separate pressure relief valve, and these two valves may be differently set. The pump 3 may be manually or automatically operated to fill the boiler 1 either entirely or up to the predetermined level, after the drawing of steam. The throttled portions S4, S9 and S11 may be so made as to permit to change and adjust the cross-section of their opening. When the invention is proportionately applied to make coffee machines for bars, the hot water temperature may be electronically controlled by providing a temperature-detecting probe just downstream of the admixing point, and by electronically varying the delivery of a suitable pump which is intended for supplying the correct quantity of cold water to be admixed with the boiler water. The whole without departing from the general concept of the invention as claimed hereinafter.

## Claims

1. A coffee-making machine with a water heater device comprising:
a) a boiler (1) which is heated by an electric resistance (6) and is connected through an inlet and a feeding line (4) to a cold water reservoir (2),
b) a steam-dispensing spout (10) connected through a valve (V29) and a duct (29) to an outlet of the boiler (1),
c) a hot water-supplying duct (19) connected through a valve (V19) to an outlet of the boiler (1),
c) a thermostat (7) with the aid of which the water in the boiler (1) is heated at the temperature as required for obtaining the steam to be supplied to the steam-dispensing spout (10),
e) an admixing point (12) in which the water of the boiler (1) is admixed with cold water from the feeding line (4), in order to obtain lower temperature hot water to be delivered to the hot water-supplying duct (19),
characterized by the combination of the following features:
f) the hot water-supplying duct (19) is connected to at least one coffee-making unit,
g) the inlet of the boiler (1) and the relative feeding line (4) are connected to the cold water reservoir (2) by means of a pump (3),
h) the duct (29) connected to the steam-dispensing spout (10) and the hot water-supplying duct (19) connected to the coffee-making unit, are branched from the same single delivery line (9) connected to a cold water/boiler water admixing point (12).

2. A coffee-making machine according to claim 1, characterized in that the cold water-feeding line (4) is provided with a throttled portion (S4), and upstream of the said throttled portion (S4) the same is connected by means of an offtake duct (11) provided with a throttled portion (S11), to an admixing point (12) located outside of the boiler (1), to which an outflow duct (8) of boiler (1) and the delivery line (9) are connected, the throttled portions (S4, S11) being so sized as to produce in the admixing point (12) the confluence of hot water from the boiler (1) and of cold water from the reservoir (2), with such a ratio that hot water at the required temperature is obtained in the delivery line (9).

3. A coffee-making machine according to claims 1 and 2, characterized in that the cold water offtake duct (11) and the outflow duct (8) of the boiler (1) open at facing coaxial positions into an admixing chamber (12) from which the delivery line (9) extends, and in which a bimetallic plate (13 is placed, which is fixed at one end and is provided at its opposite end with a double valve plug (14) cooperating with the inlet of the offtake duct (11) and the outflow duct (8), the whole arrangement being such that the bending of the bimetallic blade (13) brings about in opposite directions a change in the cross-section of the opening of the said two inlets.

4. A coffee-making machine according to claim 3, characterized in that a nonreturn valve is provided at the boiler inlet, and the bimetallic blade is made so elastic and flexible that the opening is allowed of the inlet of the boiler outflow duct (8), to let steam therethrough.

5. A coffee-making machine according to any one of Claims 1 to 4, characterized in that downstream of the admixing point (12) a throttled portion (S9) is provided in the delivery line (9), and is so sized that the delivery of hot water through the delivery line (9) is limited to such a quantity that the pump (3) is allowed to maintain in the boiler (1) a higher pressure than the boiling pressure of water, at the foreseen temperature.

6. A coffee-making machine according to Claim 5, characterized in that the throttled portion (S9) in the delivery duct (9) is replaced with a pressure relief valve (15) which is opened in the flow direction, against the load of a pressure sping (215), or the like.

7. A coffee-making machine according to any one of claims 1 to 6, characterized in that the cold water offtake duct (11) is at least at one end section thereof, before the admixing point (12), in heat exchange condition with the boiler (1).

8. A coffee-making machine according to claim 1, characterized in that the line (4) for the feeding of cold water to the boiler (1) has its outlet near to the water outlet of the said boiler (1), so that a boiler water/cold water admixture is obtained in an admixing point at the interior of the boiler (1), and this water admixture flows out of the boiler (1).

9. A coffee-making machine according to any one of claims 1 to 8, characterized in that the coffee-making unit or units are provided with heating ducts and/or hollow spaces which are supplied with steam from the boiler, the condensation water flowing possibly back into the boiler, and the steam inflow being possibly controlled by means of a thermostat.

## Patentansprüche

1. Kaffeemaschine mit Wasserheizvorrichtung, enthaltend:
a) einen Heizkessel (1), der durch einen elektrischen Widerstand (6) geheizt wird und durch einen Eingang und eine Wasserzuführungsleitung (4) mit einem Kaltwasserbehälter (2) verbunden ist,
b) eine Dampfabzapftülle (10), die durch ein Ventil (V29) und eine Leitung (29) mit einem Ausgang des Heizkessels (1) verbunden ist,
c) eine Heisswasserspeiseleitung (19), die durch ein Ventil (V19) mit einem Ausgang des Heizkessels (1) verbunden ist,
d) einen Thermostat (7), mit dessen Hilfe das Wasser im Heizkessel (1) bis zur Temperatur aufgeheizt wird, die zur Erzeugung des der Dampfabzapftülle (10) zuzuführenden Dampfes erforderlich ist,
e) ein Mischpunkt (12), in dem das Wasser des Heizkessels (1) mit kaltem Wasser aus der Wasserspeiseleitung (4) gemischt wird, um heisses Wasser zu erhalten, das der Heisswasserspeiseleitung (19) zugeführt wird,
gezeichnet durch die Kombination folgender Merkmale:
f) die Heisswasserspeiseleitung (19) ist mit mindestens einer Kaffeezubereitungseinheit verbunden,
g) der Eingang des Heizkessels (1) und die entsprechende Wasserzuführungsleitung (4) sind mittels einer Pumpe (3) mit dem Kaltwasserbehälter (2) verbunden,
h) die mit der Dampfabzapftülle (10) verbundene Leitung (29) und die mit der Kaffeezubereitungseinheit verbundene Heisswasserspeiseleitung (19) sind von der gleichen Einzelzuleitung (9) abgezweigt, die mit dem Mischpunkt (12) für das Kaltwasser und das Heisswasser des Heizkessels verbunden ist.

2. Kaffeemaschine nach Anspruch 1, dadurch gekennzeichnet, dass die Wasserzuführungsleitung (4) eine Drosselstelle (S4) besitzt und durch eine Ableitung (11) mit Drosselstelle (S11) stromaufwärts vor dieser Drosselstelle (S4) mit einem Mischpunkt (12) verbunden ist, der sich ausserhalb des Heizkessels (1) befindet und mit dem eine Ausflussleitung (8) des Heizkessels (1) und die Zuleitung (9) verbunden sind, wobei die Drosselstellen (S4,S11) so bemessen sind, dass sie im Mischpunkt (12) den Zusammenfluss von Heisswasser aus dem Heizkessel (1) und von Kaltwasser aus dem Behälter (2) in einem solchen Verhältnis bewirken, dass in der Zuleitung (9) Heisswasser mit der erforderlichen Temperatur erhalten wird.

3. Kaffeemaschine nach Anspruch 1 und 2, dadurch gekennzeichnet, dass die Kaltwasserableitung (11) und die Ausflussleitung (8) des Heizkessels (1) sich in koaxial gegenüberliegenden Stellungen in eine Mischkammer (12) öffnen, von der die Zuleitung (9) abgeht und in der sich eine Bimetallplatte (13) befindet, die an einem Ende befestigt ist und am anderen Ende mit einem doppelten, mit dem Eingang der Ableitung (11) und mit dem Eingang der Ausflussleitung (8) zusammenwirkenden Ventilverschlusskörper (14) versehen ist, das Ganze derart, dass die Verbiegung der Bimetallklinge (13) in etwa entgegengesetzten Richtungen eine Aenderung des Oeffnungsquerschnitts der beiden genannten Eingänge bewirkt.

4. Kaffeemaschine nach Anspruch 3, dadurch gekennzeichnet, dass ein Rückschlagventil am Eingang des Heizkessels vorgesehen und die Bimetallklinge so elastisch und flexibel ist, dass die Oeffnung des Eingangs der Ausflussleitung (8) des Heizkessels für den Austritt des Dampfes erzielbar ist.

5. Kaffeemaschine nach einem der Ansprüche 1 bis 4, dadurch gekennzeichnet, dass stromabwärts nach dem Mischpunkt (12) in der Zuleitung (9) eine Drosselstelle (S9) vorgesehen ist, die so bemessen ist, dass der Durchfluss von Heisswasser durch die Zuleitung (9) auf eine solche Menge beschränkt wird, dass die Pumpe (3) im Heizkessel (1) einen Druck aufrecht erhalten kann, der über dem Kochdruck des Wassers bei der vorgesehenen Temperatur liegt.

6. Kaffeemaschine nach Anspruch 5, dadurch gekennzeichnet, dass die Drosselstelle (S9) der Zuleitung (9) aus einem Druckminderungsventil (15) besteht, das sich in Durchflussrichtung entgegen der Kraft einer Druckfeder (215) od.dgl. öffnet.

7. Kaffeemaschine nach Anspruch 1 bis 6, dadurch gekennzeichnet, dass die Kaltwasserableitung (11) in mindestens einem Endabschnitt vor dem Mischpunkt (12) in wärmetauschender Beziehung mit dem Heizkessel (1) steht.

8. Kaffeemaschine nach Ansprüch 1, dadurch gekennzeichnet, dass die Leitung (4) für die Kaltwasserzuführung zum Heizkessel (1) einen Ausgang in der Nähe des Wasseraustritts des Heizkessels (1) aufweist, so dass in einem Mischpunkt im Inneren des Heizkessels (1) eine Vermischung von Heizkesselwasser und Kaltwasser erzielt wird und diese Wassermischung aus dem Heizkessel (1) ausfliesst.

9. Kaffeemaschine nach Anspruch 1 bis 8, dadurch gekennzeichnet, dass die Kaffeezubereitungseinheit bzw. die Kaffeezubereitungseinheiten der Kaffeemaschine mit Heizleitungen und/oder Hohlräume versehen ist bzw. sind, in die Dampf aus dem Heizkessel eingespeist wird, wobei das Kondenswasser möglichst in den Heizkessel zurückläuft und die Dampfspeisung möglichst durch einen Thermostaten überwacht wird.

## Revendications

1. Machine à café, porvue d'un dispositif de chauffage d'eau, comprenant:
a) un bouilleur (1), étant chauffé par une résistance éléctrique (6), et relié à un réservoir à eau froide (2), au moyen d'une entrée et d'un conduit d'alimentation (4),
(b) un bec distributeur de la vapeur (10), étant relié à une sortie du bouilleur (1), au moyen d'une soupape (V29) et d'un conduit (29),
(c) un conduit d'alimentation en eau chaude (19), étant relié à une sortie du bouilleur (1), par une soupape (V19),
d) un thermostat (7), grâce auquel l'eau dans le bouilleur (1) est chauffée jusqu'à la température d'obtention de la vapeur, destinée au bec distributeur de la vapeur (10),
e) un endroit de mélange (12), où l'eau du bouilleur (1) est mélangée à l'eau froide, provenant du conduit d'alimentation (4), afin d'obtenir de l'eau chaude à une température plus faible, destinée au conduit d'alimentation en eau chaude (19),
se caractérisant per la combinaison des caractéristiques suivantes
f) le conduit d'alimentation en eau chaude (19) est relié à une unité au moins de la machine à café,
g) l'entrée du bouilleur (1) et le conduit d'alimentation relatif (4) sont reliés au réservoir à eau froide (2), au moyen d'une pompe (3),
h) le conduit (29), qui est relié au bec distributeur de la vapeur (10), ainsi que le conduit d'alimentation en eau chaude (19), qui est relié à une unité au moins de la machine à café, sont branchés sur un seul et le même conduit de distribution (9), étant relié à un endroit de mélange (12) d'eau froide et d'eau du bouilleur.

2. Machine à café, selon la revendication 1, se caractérisant en ce que le conduit d'alimentation en eau froide (4) est pourvu d'un étranglement (S4), et le même est relié, en amont de cet étranglement (S4), par un conduit de prise d'eau (11), pourvu d'un étranglement (S11), à un endroit de mélange (12), situé à l'extérieur du bouilleur (1), auquel endroit de mélange est relié un conduit d'écoulement (8) du bouilleur (1), ainsi que le conduit de distribution (9), les étranglements (S4, S11) étant dimensionnés de manière à produire la confluence, à l'endroit de mélange (12), de l'eau chaude, provenant du bouilleur (1), et de l'eau froide, provenant du réservoir (2), dans un rapport tel à obtenir, dans le conduit de distribution (9), de l'eau chaude à la température requise.

3. Machine à café, selon les revendications 1 et 2, se caractérisant en ce que le conduit de prise d'eau froide (11) et le conduit d'écoulement (8) du bouilleur (1) débouchent, en positions coaxiales se faisant face, dans une chambre de mélange (12), dont s'étend le conduit de distribution (9), et dans laquelle est placée une plaque bimétallique (13), étant fixée par une estrémité, et pourvue, à son estrémité opposée, d'un obturateur double (14) d'une soupape, coopérant avec l'entrée du conduit de prise d'eau (11) et le conduit d'écoulement (8), la disposition de toutes les pièces étant telle, que la flexion de la lame bimétallique (13) provoque une modification, en directions contraires, de la section transversale de l'ouverture de ces deux entrées.

4. Machine à café, selon la revendication 3, se caractérisant en ce que une soupape de retenue est prévue à l'entrée du bouilleur, et que la lame bimétallique posséde un tel degré d'élasticité et de flexibilité, que l'entrée du conduit d'écoulement (8) du bouilleur peut s'ouvrir, afin de faire passer la vapeur dans ce conduit d'écoulement.

5. Machine à café selon l'une des revendications 1 à 4, se caractérisant en ce que un étranglement (S9) est prévu dans le conduit de distribution (9), en aval de l'endroit de mélange (12), cet étranglement étant dimensionné de manière à limiter la distribution de l'eau chaude par le conduit de distribution (9), à une quantité telle à permettre à la pompe (3) de maintenir dans le bouilleur (1) une pression plus élevée, à la température prévue, que la pression d'ébullition de l'eau.

6. Machine à café, selen la revendication 5, se caractérisant en ce que l'étranglement (S9) dans le conduit de distribution (9) est remplacé par une vanne réductrice de pression (15), qui s'ouvre dans la direction de flux, contre l'action d'un ressort de pression (215), ou similaire.

7. Machine à café, selon l'une des revendications 1 à 6, se caractérisant en ce que le conduit de prise d'eau froide (11) est, à une de ses parties terminales au moins, vis-à-vis de l'endroit de mélange (12), dans la condition d'échange de chaleur avec le bouilleur (1).

8. Machine à café, selon la revendication 1, se caractérisant en ce que la sortie du conduit (4) d'alimentation en eau froide au bouilleur (1) est située près de la sortie de l'eau de ce bouilleur (1), de sorte qu'un mélange d'eau du bouilleur et d'eau froide est ainsi obtenu à un endroit de mélange à l'intérieur du bouilleur (1), ce mélange d'eaux s écoulant du bouilleur (1).

9. Machine à café, selon l'une des revendications 1 à 8, se caractérisant en ce que l'unité, ou les unités, de la machine à café sont pourvues de canaux chauffants et/ou de cavités, étant alimentés en vapeur provenant du bouilleur, l'eau de condensation étant éventuellement retournée dans le bouilleur, et l'afflux de la vapeur étant éventuellement contrôlé à l'aide d'un thermostat.
